# EUROPÄISCHE PATENTSCHRIFT

(11) **EP 0 713 765 B1**
(45) Veröffentlichungstag und Bekanntmachung des Hinweises auf die Patenterteilung: **09.08.2000**
(21) Anmeldenummer: 95117836.7
(22) Anmeldetag: 13.11.1995
(51) Int. Cl.: B32B 27/32

(54) **Sterilisationsfähige, tiefziehbare, klebstofffreie und siegelbare Verbundfolie bestehend aus Polyolefinen und deren Copolymeren**
Sterilisable, deep-drawable, adhesive-free and sealable composite film comprising polyolefins or their copolymers
Feuille multicouche scellable, sans adhésif, ayant aptitude à l'emboutissage profond et stérilisable

(30) Priorität: 24.11.1994 DE 4441848
(43) Veröffentlichungstag der Anmeldung: 29.05.1996
(73) Patentinhaber: WOLFF WALSRODE AG, 29655 Walsrode (DE)
(72) Erfinder: Kaschel, Gregor, Dr., D-29664 Walsrode (DE); Kleinschmidt, Friedemann, D-29683 Fallingbostel (DE)
(74) Vertreter: Steiling, Lothar, Dr.

(56) Entgegenhaltungen:
- EP-A- 0 251 770
- DE-A- 3 630 978
- GB-A- 2 116 187
- US-A- 4 460 646
- US-A- 4 837 084

## Beschreibung

Zahlreiche Produkte sind in Folien abgepackt. Insbesondere bei der Sterilverpackung medizinischer Produkte liefert die Folie einen wesentlichen Beitrag, da sie die mikrobakterielle Kontamination verhindert. Die Verarbeitung auf den Verpackungsmaschinen erfordert häufig Folien, die zum einen tiefziehbar und zum anderen siegelbar sind. Die Tiefzieheigenschaften bestimmen maßgeblich die Verarbeitungsgeschwindigkeit und somit die Produktivität. Der Siegelschicht wird eine große Bedeutung beigemessen, da sie maßgeblich die Verarbeitungsbedingungen auf den Verpackungsmaschinen bestimmt. Insbesondere bei der Versiegelung einer Kunststoffolie mit Papier werden besonders hohe Ansprüche an die Folie gestellt. Normalerweise lassen sich nicht alle an eine Verpackung gestellten Anforderungen durch ein Polymer erfüllen, daher werden Polymere unterschiedlicher Sorten kombiniert. Wünschenswert ist die Verwendung ähnlicher Polymere, um die stoffliche Wiederverwertung der Folie zu verbessern. In diesem Fall soll die Folie bevorzugt aus Polyolefinen und Copolymeren der Olefine bestehen.

Üblicherweise werden für die Verpackung medizinischer Geräte Folien gewählt, die aus Polyamid und einer Siegelschicht aus Polyethylen bestehen. In der Regel wird das Polyamid (PA) als Flachfilm hergestellt und mit einer Folie bestehend aus Polyethylen niedriger Dichte (LDPE) oder deren Copolymeren (z.B. Ethylen/Vinylacetat-Copolymer) kaschiert. Als Beispiel seien hier die Verbunde PA/LDPE oder PA/EVA aufgeführt.

Es sind auch Verbunde mit dem Aufbau PP/HV/PA/HV/LDPE bekannt. Als Herstellungsverfahren dominiert hier die Blasfolie. Das verwendete Polyamid (PA) ist in der Regel ein auf ε-Caprolactam basierendes Copolymerisat, das z.B. die Comonomere Hexamethylendiamin und Adipinsäure enthalten kann. Der Kristallitschmelzpunkt des Copolyamides liegt in der Regel zwischen 190°C und 200°C. Als Haftvermittler (HV) werden in der Regel modifizierte Polyolefine eingesetzt, die z.B. mit Maleinsäureanhydrit gepfropft sind. Als Siegelschicht wird z.B. Polyethylen niedriger Dichte (LDPE) eingesetzt. Die Außenschicht bildet ein Polypropylen (PP).

In der Regel werden die medizinischen Geräte auf einer Tiefziehmaschine verpackt. Je nach verwendeten Sterilisationsverfahren werden die Deckel- und Muldenfolien ausgewählt. Gängige Sterilisationsverfahren sind die Gassterilisation (Mikroorganismen werden durch toxische Gase denaturiert) und die Strahlensterilisation (Mikroorganismen werden durch energetische Strahlung denaturiert). Beide Verfahren werden bevorzugt bei der Sterilisation von medizinischen Geräten angewandt. Beide Sterilisationsverfahren sind anzutreffen und daher auch bei der Auswahl der Verpackungsfolien zu berücksichtigen.

In der EP 0 164 190 wird eine einschichtige Verpackung beschrieben, die mit Hilfe der Gas-, Strahlen- und Hitzesterilisation sterilisiert werden kann. Die beschriebene Folie enthält eine Mischung aus mindestens 20 Gew.-% Polypropylen, 10 bis 60 Gew.-% Ethylen-Propylen-Elastomer und 10 bis 60 Gew.-% Polyethylen. Die Folie soll auch tiefziehbar sein. Einschichtige Folien haben aber den Nachteil, daß keine hohen Verarbeitungsgeschwindigkeiten erreicht werden können, da auf der Siegelseite die gleichen Polymere vorliegen wie auf der den beheizten Werkzeugen zugewandten Folienseite. Solche Folien neigen daher zum Anhaften auf den beheizten Werkzeugen, die Verarbeitung ist gerade bei hohen Taktzahlen problematisch.

In DE 33 15 652 wird eine mehrschichtige, tiefziehbare Verbundfolie und ihre Verwendung für die Herstellung von Vakuumtiefziehpackungen zur Aufnahme von Kunststoffbeuteln mit Blutinfusionslösung beschrieben. Die Folie ist dadurch gekennzeichnet, daß die beiden Außenlagen entweder aus Polypropylen, ein Copolymer des Propylens oder Polyethylen hoher Dichte besteht. Die beiden miteinander verblockten Innenlagen bestehen aus Ethylen/Vinylacetat-Copolymeren. Das verwendete Ethylen/Vinylacetat-Copolymeren enthält vorzugsweise 10 bis 35 Gew.-% Vinylacetat.

In DE 28 29 871 wird eine sterilisierbare Verpackung für medizinische Artikel beschrieben. Die dort vorgestellte Verpackung besitzt auf ihrer Unterseite eine Verbundfolie aus unverstrecktem Polypropylen mit Polyethylen und auf der Oberseite eine Trägerfolie aus Kunststoff oder Aluminium mit einer schweißfähigen Schicht aus biaxial verstrecktem Polypropylen. Die tiefziehbare Unterfolie ist so angeordnet, daß das Polypropylen mit der biaxial verstreckten Polypropylenfolie versiegelt wird. Dadurch wird die Siegelnaht peelfähig. Die Unterfolie wird mit der Deckelfolie bei Temperaturen von etwa 290°C versiegelt und anschließend mittels Gas- oder Strahlenbehandlung sterilisiert.

In DE 34 31 364 wird eine heißsiegelbare, flexible Verbundfolie sowie ihr Herstellverfahren beschrieben. Sie besteht aus einer Siegelschicht basierend auf Propylen-Copolymerisaten mit 2,8 bis 3,8 Gew.-% Ethylen und einer Trägerschicht basierend auf Polypropylen, vorzugsweise aus Propylen/Ethylen-Blockcopolymerisat, besteht. Das Dickenverhältnis der Siegelschicht zur Trägerschicht liegt zwischen 1:1 bis 1:10. Die Verbundfolie dient bevorzugt als Verpackung medizinischer Lösungen oder Instrumente und Vorrichtungen. In Parixtests hat sich aber gezeigt, daß die Siegelschichten aus Polypropylen oder aus Propylen-Copolymerisaten sehr lange Siegelzeiten und hohe Siegeltemperaturen von 150°C und mehr erfordern. Dadurch bedingt ist die erreichbare Taktzahl auf den Verarbeitungsmaschinen deutlich niedriger als bei einer auf Ethylen basierenden Siegelschicht.

In EP 0 247 664 wird ein mehrschichtiges Laminat, das mittels Stempelverformung tiefgezogen wird, beschrieben. Es ist aus mindestens einer Schicht eines Sauerstoff sperrenden Polymers, mindestens einer haftvermittelnden Schicht und mindestens einer Schicht bestehend aus einer siegelbaren Polymermischung, die aus 10 bis 50 Gew.-% Polyethylen hoher Dichte mit dem Schmelzindex zwischen 0,1 bis 4 dg/min (ASTM D 1238, 2,16 kg, 100°C) und 50 bis 90 Gew.-% Polypropylen mit dem Schmelzindex 0,3 bis 10 dg/min (ASTM D 1238, Prüfbedingung L) besteht, zusammengesetzt. Die Folie ist nur mit Unterstützung eines Stempels tiefziehbar, was nicht im Sinne dieser Erfindung ist.

In allen Patenten wird nicht über die Fähigkeit der Folien, gegen Papier zu siegeln, berichtet. Weiterhin wird nicht berichtet, daß diese Folien auf den Tiefziehmaschinen mit hohen Taktzahlen (mehr als 20 Takte/min) verarbeitet werden können. Bei einigen Folien, deren Siegelschichten aus Polypropylen oder Propylencopolymerisaten bestehen, werden Siegeltemperaturen weit oberhalb der gewünschten 130°C bis 150°C erreicht. Dies führt zu hohen Siegeltemperaturen und langen Siegelzeiten. Somit wird die Produktivität einer Verpackungseinrichtung negativ beeinflußt.

Es stellt sich daher die Aufgabe, eine siegelbare Folie bereitzustellen, die folgenden Anforderungen entspricht:

### 1. Folie bestehend aus Polyolefinen oder deren Copolymeren:

Gewünscht wird eine polyolefinische Folie, da Polyolefine weit verbreitete Standardkunststoffe sind. Die verwendeten Copolymere sollen ebenfalls zum überwiegenden Teil aus Olefinen bestehen. Somit wird dem Gedanken der stofflichen Vereinheitlichung entsprochen.

### 2. klebstofffreier Verbund:

Die Folie soll keinen Klebstoff enthalten, da Klebstoffe Probleme bei der stofflichen Wiederverwertung bereiten können. Unter Klebstoffen sind Produkte zu verstehen, die gemäß ihrer jeweiligen chemischen Zusammensetzung und dem vorliegenden physikalischen Zustand zum Zeitpunkt des Auftragens auf die zu verbindenden Fügeteile eine Benetzung der Oberfläche ermöglichen und in der Klebefuge die für die Kraftübertragung zwischen den Fügeteilen erforderliche Klebschicht ausbilden. Die abgebundene Klebstoffschicht ist in der Regel nicht mehr thermoplastisch verarbeitbar.

### 3. Verarbeitungsgeschwindigkeit:

Die Verarbeitungsgeschwindigkeit auf den Tiefziehmaschinen ist ein wichtiger Punkt im Anforderungsprofil. Hier kommt es besonders auf eine hohe Taktzahl an, denn somit können auf einer Tiefziehmaschine mehr Packungen pro Zeiteinheit hergestellt werden. Somit ist die Taktfrequenz ein geeignetes Beurteilungskriterium.

### 4. niedrige Siegeltemperatur:

In der Regel werden niedrige Siegeltemperaturen zur schonenden Behandlung der Packstoffe und Füllgüter gewünscht. Die Beurteilung entsprechend dieses Anforderungsprofiles kann unmittelbar über die an der Tiefziehmaschine eingestellte Siegeltemperatur erfolgen.

### 5. Siegelverhalten gegen Papier:

Bei der sterilen Verpackung von z.B. medizinischen Geräten, die mit einem Gas sterilisiert werden, wird häufig ein Deckel aus Papier gewählt. Als ein wichtiger Aspekt ist daher die Siegelung der Kunststoffolie gegen Papier zu nennen. Auf der einen Seite sollen die Siegelnähte absolut dicht sein und somit vor einer Kontamination von außen schützen. Auf der anderen Seite wird das leichte Öffnen der Packung ohne Hilfsinstrumente in Verbindung mit peelfähigen Siegelnähten gefordert.

Als "Siegelschicht" wird die außen liegende Schicht der Folie mit dem niedrigsten Schmelzpunkt bezeichnet. Enthalten die Außenschichten Polymermischungen, so wird als Siegelschicht die Folienaußenseite bezeichnet, die die niedrigst schmelzende Komponente enthält. Bei der Angabe von Folienaufbauten wird die Siegelschicht rechts geschrieben, wenn nicht anders angegeben.

Als "LLDPE" werden die linearen Polyethylen niedriger Dichte bezeichnet, die neben Ethylen als Comonomere ein oder mehrere α-Olefine mit mehr als 3 C-Atomen enthalten. Aus der Polymerisation der genannten Stoffe ergibt sich die für LLDPE typische molekulare Struktur, die durch eine lineare Hauptkette mit daranhängenden Seitenketten gekennzeichnet ist.

Als "Very Low Density Polyethylen", "VLDPE", wird ein lineares Ethylen-Copolymerisat mit einer Dichte im Bereich 0,86 bis 0,915 g/cm³ bezeichnet. Die Comonomere bestehen aus Olefinen.

Mit "PP" wird Polypropylen bezeichnet.

Als "EPR" werden Copolymerisate bestehend aus Propylen und einem oder mehreren α-Olefinen verstanden. Der Propylengehalt beträgt mindestens 90 Mol-%. Die Comonomere sind statistisch in der Polymerkette verteilt.

Mit "EE" werden Copolymerisate bestehend aus Ethylen und ungesättigten Estern bezeichnet. Der Ethylengehalt liegt vorzugsweise zwischen 60 und 99 Mol-%.

Mit "EA" werden Copolymerisate bestehend aus Ethylen und ungesättigten Carbonsäuren bezeichnet. Der Ethylengehalt liegt vorzugsweise zwischen 60 und 99 Mol-%.

Mit "EVA" wird ein Copolymerisat bestehend aus Ethylen und Vinylacetat bezeichnet. Der Ethylengehalt liegt vorzugsweise zwischen 60 und 99 Mol-%.

Als "Zwischenschicht", "Verbindungsschicht" oder "mittlere Schicht" wird die Schicht oder die Schichten aufgefaßt, die zwischen den Folienaußenseiten liegt oder liegen. Die Schichten einer Folie werden durch einen "/"-Strich getrennt. Polymermischungen werden durch ein "+" gekennzeichnet, wobei die beteiligten Polymere durch runde Klammern zusammengefaßt sind.

Es folgt ein Beispiel für die vereinbarte Schreibweise von Folienaufbauten.

Der dreischichtige Aufbau LLDPE/(LDPE+EVA)/EVA hat als Außenschichten LLDPE und EVA, als Zwischenschicht eine Mischung aus LDPE und EVA. Die Siegelschicht ist EVA. Der hier beispielhaft angegebene Folienaufbau stellt nicht eine Folie im Sinne der Anmeldung dar, sondern soll nur die vereinbarte Schreibweise von Folienaufbauten illustrieren.

Erfindungsgemäß gelang dies durch eine mehrschichtige, tiefziehbare, klebstofffreie und gegen Papier siegelbare Folie, dadurch gekennzeichnet, daß
- alle Schichten Polyolefine oder Copolymerisate, deren Olefingehalt mindestens 60 Mol-% beträgt, enthalten und
- auf der Siegelseite der Folie eine Mischung aus 10 bis 90 Gew.-% (1. Komponente) linearem Ethylencopolymerisat niedriger Dichte (LLDPE) und 90 bis 10 Gew.-% (2. Komponente) Ethylencopolymerisat, das entweder mit ungesättigten Carbonsäuren oder mit ungesättigten Estern gebildet wird, enthält und
- die der Siegelseite gegenüberliegende Außenschicht der Folie Polypropylen oder Copolymerisaten des Propylens oder eine Mischung von zwei unterschiedlichen LLDPE-Typen oder eine Mischung von LLDPE mit LDPE enthält.

Das in der Siegelschicht enthaltene lineare Ethylencopolymerisat niedriger Dichte (1. Komponente) besteht aus Ethylen und einem oder mehreren α-Olefinen mit mehr als 3 C-Atomen. Als Beispiele für die α-Olefine seien hier genannt Buten-1, Hexen-1, 4-Methylpenten-1 und Octen-1. Da bei diesem Polymer kaum Langkettenverzweigungen auftreten, zählen sie zu den linearen Typen (LLDPE). Die Dichte des LLDPE kann zwischen 0,91 und 0,94 g/cm³ variieren.

Das in der Siegelschicht enthaltene Ethylencopolymerisat (2. Komponente) enthält als Comonomeres ungesättigte Ester oder ungesättigte Carbonsäuren. Als Beispiele für die ungesättigten Ester seien hier aufgeführt Vinylacetat, Ethylacrylat, Methylacrylat und Butylacrylat. Als Beispiele für die ungesättigten Carbonsäuren seinen hier genannt Acrylsäure und Methacrylsäure. Ebenso geeignet sind Copolymerisate aus Ethylen und ungesättigten Carbonsäuren, die mit Metallionen, wie zum Beispiel Natrium- oder Zinkionen, teilweise oder vollständig versalzt sind. Dabei ist der Gehalt der Metallionen im Polymer so gering, das sie gegenüber allen anderen Elementen, die das Polymer bilden, als vernachlässigbar gering eingestuft werden kann. Der Ethylengehalt der 2. Siegelschichtkomponente liegt bei mindestens 60 Mol-%.

Vorzugsweise enthält die der Siegelschicht abgewandte Folienaußenseite folgende Polyolefine oder folgende Mischungen aus Polyolefinen:
- PP oder
- EPR mit mindestens 90 Mol-% Propylen oder
- eine Mischung bestehend aus unterschiedlichen LLDPE-Typen, die sich in ihren Comonomeren unterscheiden, und vorzugsweise im Gewichtsverhältnis 2:1 bis 1:2 gemischt sind, oder
- eine Mischung aus LLDPE mit LDPE, die vorzugsweise im Gewichtsverhältnis 80% bis 95% LLDPE zu 5% bis 20% LDPE liegt.

Als Möglichkeiten für den Aufbau der mehrschichtigen, erfindungsgemäßen Folie sind folgende Strukturen denkbar, wobei mit "S" die erfindungsgemäße Siegelschicht bezeichnet wird. Mit "(LLDPE+PE)" werden die bereits angesprochenen Mischungen von LLDPE mit einem anderen LLDPE-Typ oder mit LDPE bezeichnet.

**Tabelle 1:**

| Auswahl möglicher Folienaufbauten der erfindungsgemäßen Folie | |
|---|---|
| 1. EPR/S, | 11. (LLDPE+PE)/S, |
| 2. EPR/LLDPE/S, | 12. (LLDPE+PE)/LDPE/S, |
| 3. PP/VLDPE/S, | 13. (LLDPE+PE)/VLDPE/S, |
| 4. EPR/EVA/S, | 14. (LLDPE+PE)/EVA/S, |
| 5. EPR/EVA/EPR/EE/S, | 15. (LLDPE+PE)/EA/(LLDPE+PE)/EE/S, |
| 6. PP/VLDPE/EPR/VLDPE/S, | 16. (LLDPE+PE)/LDPE/(LLDPE+PE)/LDPE/S, |
| 7. EPR/VLDPE/LLDPE/LDPE/S, | 17. (LLDPE+PE)/VLDPE/EPR/VLDPE/S, |
| 8. EPR/VLDPE/LLDPE/S, | 18. (LLDPE+PE)/EPR/S, |
| 9. EPR/(VLDPE+EPR)/S, | 19. (LLDPE+PE)/(LLDPE+VLDPE)/S, |
| 10. EPR/(EPR+EVA)/S, | 20. (LLDPE+PE)/(LLDPE+EVA)/S. |

Die aufgeführten Folienaufbauten können keinen vollständigen Überblick zu allen möglichen Variationen geben.

Alle Polymere der Zwischenschicht oder der Zwischenschichten werden mit folgenden Monomeren gebildet: ein oder mehrere Olefine, Acrylsäure, Methacrylsäure, Vinylacetat, Ethylacrylat, Methylacrylat oder Butylacrylat. Der Olefingehalt beträgt auch bei den Polymeren der Zwischenschicht mindestens 60 Mol-%.

Die Wahl und Kombination der Zwischenschichten orientiert sich nach verschiedensten Gesichtspunkten wie zum Beispiel die Haptik, Planlage und Rollneigung der Folie. Eine weitere wichtige Aufgabe der Zwischenschichten ist es, die Haftung zwischen zwei Schichten zu verbessern. So fungiert das VLDPE in Beispiel 6 der Tabelle 1 als haftvermittelnde Schicht zwischen PP und der ethylenischen Siegelschicht, denn die Verbundhaftung zwischen PP und S erreicht häufig nicht das gewünschte Maß.

Die Foliendicke liegt vorzugsweise im Bereich von 30 µm bis 300 µm

Zur Verbesserung der Konfektionierung können einer oder beiden Deckschichten der Folie übliche Additive zugesetzt werden. Dies sind zum Beispiel organische oder anorganische Antiblockmittel oder aber ein Gleitmittel oder aber Antistatika. Bekannte Antiblockmittel sind beispielsweise anorganische, unverträgliche Polymerisate wie Polyester, Polycarbonat und dergleichen oder anorganische Substanzen wie Siliziumdioxid oder Silicate. Gleitmittel sind beispielsweise Fettalkohole, Fettsäurediamide oder andere Stoffe, wie sie bei Piringer angegeben werden (Otto Piringer: Verpackungen für Lebensmittel, VCH Verlagsgesellschaft 1993, siehe S. 53). Bekannte Antistatika sind nach Domininghaus (S. 23) bei den sogenannten inneren Antistatika ethoxylierte tertiäre Amine von Fettsäuren oder ethoxylierte Glykolester von Fettsäuren oder aber bei den äußeren Antistatika quaternäre Ammoniumsalze von Fettsäuren.

Die Mischung verschiedener Polymere oder Polymeren mit Masterbatchen, die Additive in erhöhter Konzentration enthalten, erfolgt zweckmäßigerweise durch die intensive Vermengung des Granulats vor der Zugabe in den Extruder. Im Extruder werden dann die Stoffe intensiv gemischt bzw. die Additive dispergiert.

Die der Siegelseite abgewandte Folienaußenseite kann einer physikalischen Oberflächenbehandlung unterzogen werden. Man unterscheidet hier die elektrischen (Corona-Vorbehandlung) und thermische Verfahren (siehe hierzu G. Habenicht: Kleben, Springer-Verlag Berlin, 1986, S. 341ff). Dadurch wird die Folieaußenseite derart modifiziert, daß sie weniger zum Anhaften an den Oberflächen der Siegelstation neigt.

Die Folie eignet sich besonders für Produkte, die mit einer Kunststoffolie und einem mikroporösen Deckel verpackt werden. Als mikroporöser Deckel kann zum Beispiel Papier oder ein Spinnvlies bestehend aus Polyethylen eingesetzt werden. Das Vlies wird zunächst durch Spinnen von feinsten, untereinander verbundenen Fasern geformt; anschließend werden die Fasern durch Hitze und Druck gebunden.

Die erfindungsgemäße Folie kann ebenfalls bei niedrigen Temperaturen mit einer Folie versiegelt werden, die eine auf Ethylen basierende Siegelschicht enthält. Als Beispiel seien hier die Polymere LDPE, LLDPE und EVA oder Mischungen aus diesen Polymeren genannt. Es ist natürlich möglich, die erfindungsgemäße Folie als Mulden- und Deckelfolie einzusetzen.

Mindestens eine der angeführten Schichten kann nach Bedarf eingefärbt sein. Die erfindungsgemäßen Folien können auch bedruckt sein. Dies kann auf der Siegelschicht abgewandten Folienaußenseite erfolgen.

Durch den Einsatz der erfindungsgemäßen Folie wird ein deutlicher Beitrag zur Stoffvereinheitlichung geleistet, da die Folie aus Polyolefinen oder aus Copolymerisaten, deren Olefingehalt mindestens 60 Mol-% beträgt, besteht. Die heterogene Zusammensetzung der Polymere ist soweit reduziert worden, daß alle Monomere nur noch die Elemente Kohlenstoff, Wasserstoff und Sauerstoff enthalten. Die stoffliche und chemische Verwertung der Folienabfälle ist somit deutlich vereinfacht und verbessert.

Unterstützt wird die stoffliche Vereinheitlichung weiterhin dadurch, daß die Folie klebstofffrei hergestellt ist. Klebstoffe können in der Regel nicht mehr thermoplastisch verarbeitet werden. Weiterhin enthalten eine Vielzahl der Klebstoffe Isocyanate und somit wiederum das Element Stickstoff.

Es war nicht zu erwarten, daß durch die erfindungsgemäße Folie die Verarbeitungsgeschwindigkeit auf den Verpackungsmaschinen gesteigert werden kann. Hier sind in praxisnahen Tests auf Tiefziehmaschinen Steigerungen der Taktzahlen um 20% gegenüber konventionellen PA-PE-Folien erreicht worden. Die hohen Taktzahlen werden ohne die Unterstützung eines Stempels beim Tiefziehvorgang erreicht. Weiterhin muß hier betont werden, daß alle bislang üblichen Folien für diese hohen Verarbeitungsgeschwindigkeiten als thermisch stabilisierendes Polymer Polyamid enthalten. Durch das Polyamid wird die Folie selbst bei Temperaturen von von 160°C und mehr weder beim Tiefziehvorgang noch in der Siegelstation zerstört, denn der Schmelzpunkt des Polyamid liegt in der Regel oberhalb von 190°C. Eine Folie aus Polyolefinen oder aus daraus abgeleiteten Polymeren würde beim Tiefziehvorgang oder bei der Siegelung derart geschädigt, daß Löcher oder Abquetschungen auftreten. Nur durch die erfindungsgemäße Folie ist es gelungen, die hohen Taktzahlen zu erreichen und sogar zu verbessern (siehe Tabelle 2).

Die hohen Verarbeitungsgeschwindigkeiten der erfindungsgemäßen Folie konnten nur dadurch erreicht werden, daß sich die Folie gut tiefziehen und ebenfalls gut mit Papier versiegeln läßt. Gerade die Versiegelung mit Papier ist problematisch, da Papier und Kunststoffolie chemisch und physikalisch unterschiedlicher Konsistenz sind. Es war nicht zu erwarten, daß durch die erfindungsgemäße Folie die geforderte Nahtfestigkeit zwischen Folie und Papier bereits bei niedrigeren Siegeltemperaturen von 140°C erreicht wird (siehe Tabelle 3). Dadurch wird das Packgut durch absolut dichte Siegelnähte vor Kontamination von außen geschützt.

Auf der anderen Seite ist durch die erfindungsgemäße Folie das geforderte leichte Öffnen der Packung ohne Hilfsinstrumente (wie z.B. Schere und Messer) in Verbindung mit einer peelfähigen Naht Papier/Folie gewährleistet. Beim Öffnen löst sich die Folie von der Siegelnaht ohne das Papier zu zerfasern.

Die Polyolefine PP und EPR sind, wie Tests gezeigt haben, in der Regel gut tiefziehbar. Sie sollten dann Anwendung finden, wenn aus bestimmten Gründen die Folienaußenseite aus einem Polymer höherer Temperaturbeständigkeit bestehen muß. Aber Folien mit einer PP- oder EPR-Außenschicht versagen aus bereits genannten Gründen, wenn nicht die erfindungsgemäße Siegelschicht bei der Versiegelung gegen Papier eingesetzt wird (siehe Vergleichsbeispiel 5 in der Tabelle 2). Wird die Stoffauswahl der Folie auf ethylenische Polymere einschränkt, so hat sich überraschender Weise nur LLDPE abgemischt mit LDPE oder einem LLDPE, das ein anderes Comonomer enthält, in Kombination mit der erfindungsgemäßen Siegelschicht bewährt. Andernfalls können nicht die hohen Taktzahlen auf den Verpackungsmaschinen erreicht werden, da sich in der Folie während des Maschinenlaufes Löcher bilden.

Die erfindungsgemäßen Folien eignen sich für das Sterilisationsverfahren mit Ethylenoxid wie auch mit γ-Strahlen.

Die Folie eignet sich für eine Vielzahl von Füllgütern. Die Folie ist flexibel und transparent; sie bietet eine hohe Wasserdampfbarriere und Schutz vor einer mikrobiellen Kontamination von Außen. Als Füllgüter kommen zum Beispiel medizinische Einmalgeräte in Frage.

Die Herstellung der erfindungsgemäßen Folie kann auf allen mehrschichtigen Blas- oder Flachfolien-, Beschichtungs- oder Extrusionskaschieranlagen erfolgen. Weiterhin ist es möglich, ein oder mehrere der genannten Fertigungsverfahren zu kombinieren. Die Folie kann zum Beispiel auf einer Tiefdruck- oder Flexodruck-Maschine bedruckt werden.

Zur Beurteilung der Folien wird ein praxisnaher Test auf einer Tiefziehmaschine mit Siegeleinrichtung herangezogen (Tiromat 3000 der Fa. Krämer & Grebe). Die Folie wird durch eine Heizplatte erwärmt und anschließend in vorgeformte, starre Mulden ohne die Unterstützung eines Stempels tiefgezogen. Anschließend wird die Folie in der Siegelstation mit Papier als Deckelfolie versiegelt. Das dabei eingesetzte Sterilisationspapier ist ein gasdurchlässiges, keimdichtes, handelsübliches Produkt und wird vorwiegend bei der Sterilisation mit Ethylenoxid eingesetzt.

Die Beurteilung der Folien wird nach folgenden Punkten vorgenommen: Zuerst wird die Einstellung der Maschine den unterschiedlichen Folien angepaßt, um die maximale Taktzahl bestimmen zu können. Unter diesen, für jede Folie optimalen Bedingungen, wird das Tiefziehergebnis und die Versiegelung Papier/Folie beurteilt. Beim Tiefziehergebnis werden folgende Punkte berücksichtigt, wobei in Klammern das jeweils optimale Ergebnis angegeben ist: Löcher in der Mulde (keine Löcher), Ausformung der Mulde (vollständige Ausformung), Abdruck der Heizplatte auf der Folienoberfläche (nicht sichtbar) und Formstabilität der Mulde (kein Schrumpfen der Folie). Wenn alle Kriterien erfüllt sind, wird die Folie mit "++" beurteilt. Ist ein Kriterium nicht erfüllt, so wird die Folie mit "+" beurteilt. Mit "o" wird die Folie bewertet, die in zwei Kriterien kein optimales Ergebnis erzielt hat. Mit "-" wird die Folie bewertet, die bei allen Einstellungen Löcher in der Mulde aufweist. Die Taktzahl wird auf der Tiefziehmaschine angezeigt (siehe Tabelle 2).

Die Versiegelung der Folie wird durch einen manuellen Test beurteilt. Als negativ wird beurteilt, wenn sich das Papier zu leicht von der Folie löst oder so stark an der Folie haftet, daß es beim Aufreißen der Naht zerfasert. Entspricht die Siegelung den genannten Anforderungen, so wird sie mit "++" beurteilt. Mit "o" wird ein lockeres Anhaften der Folie am Papier beurteilt, was unter Umständen zum unbeabsichtigen Öffnen der Naht führen kann. Mit "-" wird das Auftreten von mechanischen Verletzungen bedingt durch die Siegelwerkzeuge bewertet (siehe Tabelle 2).

Die in der Tabelle 3 angegebenen Nahtfestigkeiten Papier/Folie wurden folgendermaßen bestimmt: Unter den angegebenen Bedingungen wurde auf der Tiefziehmaschine die Folie mit Papier versiegelt. Aus der Naht werden 15 mm breite Streifen mit einem Prüfstreifenschneider geschnitten. Mit einer Zugfestigkeitsprüfmaschine wird der Streifen auf seine Siegelfestigkeit untersucht, indem er senkrecht zur Naht getrennt wird. Es wird der Maximalwert der beim Zerreißen aufgetretenen Kraft registriert. Mit "++" werden Festigkeiten von größer 2 N/15mm, mit "-" kleiner 1 N/15mm beurteilt. Die Siegeltemperatur und Siegelzeit wird auf der Tiefziehmaschine eingestellt und angezeigt.

### Beispiele und Vergleichsbeispiele

Alle genannten Polymere sind kommerziell erhältliche Handelsprodukte. Bei Mischungen werden, wenn nicht anders angegeben, die Konzentrationen der einzelnen Polymere in Gew.-% ausgedrückt. Die angegeben Dichten sind entsprechend ISO 1183 bei 23°C und die Schmelzfließraten MFR entsprechend ISO 1133 bestimmt worden, wobei die zuerstgenannte Zahl in der Klammer die Temperatur und die zweitgenannte Zahl das Auflagegewicht kennzeichnet. Die Polymere werden entsprechend der vereinbarten Konvention abgekürzt. Unterschiedliche Polymere gleicher Klasse werden durch einen Bindestrich und eine Zahl ausgewiesen (Beispiel: LLDPE-2). Bis auf Vergleichsbeispiel 1 enthalten alle Folien in beiden Außenschichten Gleit- und Antiblockmittel. Alle erfindungsgemäßen Folien werden mit "Beispiel" gekennzeichnet.

Vergleichsbeispiel 1: Eine als Flachfilm gefertigte, 24 µm dicke PA-Folie wird mit einer coextrudierten Blasfolie, die den Aufbau LDPE-1/EVA-1 (Schichtdicken 15/20 µm) hat, lösungsmittelfrei kaschiert. Das verwendete Polyamid ist vom Typ PA6, es ist nukleiert und hat eine relativen Lösungsviskosität von 3,8 gemessen in m-Kresol. Die Siegelschicht (EVA-1) enthält ca. 3,5 Mol-% Vinylacetat` die Dichte beträgt 0,927 g/cm³ und der Schmelzindex MFR(190/2,16) liegt bei 1,7 g/10 min. Das in der Blasfolie eingesetzte LDPE-1 hat eine Dichte von 0,934 g/cm³ und einen Schmelzindex MFR(190/2,16) von 3 g/10 min. Die EVA-Siegelschicht enthält Gleit- und Antiblockmittel.

Das Vergleichsbeispiel 2 ist eine zweischichtige, coextrudierte Blasfolie mit dem Aufbau LLDPE-1/EVA-2 (Schichtdicken 90/30 µm). Das LLDPE-1 enthält als Comonomer Buten-1, es hat eine Dichte von 0,918 g/cm³ und einem Schmelzindex MFR(190/2,16) von 1 g/10 min. Das EVA-2 enthält als Comonomer ca. 4,5 Mol-% Vinylacetat, es hat eine Dichte von 0,928 g/cm³ und einem Schmelzindex MFR(190/2,16) von 2 g/10 min.

Das Vergleichsbeispiel 3 ist eine zweischichtige, coextrudierte Folie mit dem Aufbau LDPE-2/EVA-2 in den Schichtdicken 50/20 µm. Das LDPE-2 hat eine Dichte von 0,923 g/cm³ und einen MFR(190/2,16) von 2 g/10min. Das EVA-2 ist bereits in Vergleichsbeispiel 2 erläutert.

Das Vergleichsbeispiel 4 ist eine mehrschichtige, coextrudierte Folie mit dem Aufbau HDPE/LLDPE-2/LDPE-3 (Schichtdicken 13/26/31 µm). Das HDPE ist ein Polyethylen hoher Dichte (0,957 g/cm³) und hat einem MFR(190/2,16) von 8 g/10min. Das LLDPE-2 enthält als Comonomer Octen-1, die Dichte beträgt 0,936 g/cm³ und der Schmelzindex MFR(190/2,16) liegt bei 4,4 g/10 min. Das LDPE-3 hat eine Dichte von 0,919 g/cm³ und einen MFR(190/2,16) von ca. 7 g/10min.

Das Vergleichsbeispiel 5 ist eine mehrschichtige Folie mit dem Aufbau EPR/EVA-3/EVA-2 in den Schichtdicken 20/30/20 µm. Das EPR wird in Beispiel 6 erläutert. Das EVA-3 enthält ca. 9 Gew.-% Vinylacetat, es hat eine Dichte von 0,928 g/cm³ und den Schmelzindex MFR(190/2,16) von ca. 2 g/10 min. Das EVA-2 ist bereits in Vergleichsbeispiel 2 erläutert worden.

Das Beispiel 6 ist eine dreischichtige, coextrudierte Blasfolie mit dem Aufbau EPR/(50% EPR+ 50% VLDPE)/(60% LLDPE-3 + 40% EE) mit den Schichtdicken 30/30/30 µm. Das EPR ist ein statistisches Propylen/Ethylen-Copolymerisat mit einem Ethylengehalt von ca. 8 Mol-%. Die Dichte beträgt 0,9 g/cm³ und der Schmelzindex MFR(230/2,16) liegt bei 8 g/10 min. Das VLDPE ist ein lineares Ethylenpolymerisat mit einer Dichte von 0,913 g/cm³ und einem Schmelzindex MFR(190/2,16) von 3,3 g/10 min. Das LLDPE-3 ist ein lineares Polyethylen niedriger Dichte mit dem Comonomer Octen-1, die Dichte beträgt 0,92 g/cm³ und der Schmelzindex MFR(190/2,16) 1,1 g/10 min. Das EE ist ein Copolymerisat aus Ethylen und ca. 17 Gew.-% Butylacrylat, es hat eine Dichte von 0,93 g/cm³ und einem Schmelzindex MFR(190/2,16) von 3 g/10 min.

Das Beispiel 7 ist eine zweischichtige, coextrudierte Folie mit dem Aufbau (50% LLDPE-3+50% LLDPE-4)/(60% LLDPE-3 + 40% EE) mit den Schichtdicken 60/30 µm. Die Polymere LLDPE-3 und EE sind bereits im Beispiel 6 beschrieben. Das LLDPE-4 enthält als Comonomer Buten-1, die Dichte beträgt 0,919 g/cm³ und der Schmelzindex MFR(190/2,16) liegt bei 0,7 g/10 min.

**Tabelle 2:**

| Verarbeitungstest auf einer Tiefziehmaschine mit Papier als Deckelfolie | | | |
|---|---|---|---|
| Muster | Takte T/min | Beurteilung | |
| | | Tiefziehen | Versiegelung |
| Vergleichsbeispiel 1 | 20 | o | ++ |
| Vergleichsbeispiel 2 | 20 | - | o |
| Vergleichsbeispiel 3 | 20 | - | - |
| Vergleichsbeispiel 4 | 20 | - | - |
| Vergleichsbeispiel 5 | 21 | + | - |
| Beispiel 6 | 24 | ++ | ++ |
| Beispiel 7 | 24 | + | ++ |

Im folgenden werden die besonderen Eigenschaften der Siegelschicht belegt. Tabelle 3 zeigt auf, daß unter vergleichbaren Siegelbedingungen die erfindungsgemäße Folie besser gegen Papier siegelt als eine konventionelle Folie.

Das Vergleichsbeispiel 8 ist eine zweischichtige, coextrudierte Folie mit dem Aufbau (90% LLDPE-2+10% LDPE-4)/LLDPE-3 mit den Schichtdicken 60/30 µm. Das LDPE-4 hat eine Dichte von 0,923 g/cm³ und einen MFR(190/2,16) von 2 g/10min. Das LLDPE-2 ist in Vergleichsbeispiel 4 und das LLDPE-3 in Beispiel 6 beschrieben.

Das Beispiel 9 ist eine zweischichtige, coextrudierte Folie mit dem Aufbau (90% LLDPE-2+10% LDPE-4)/(60% LLDPE-3 + 40% EA-1) mit den Schichtdicken 60/30 µm. Das LLDPE-2 ist bereits in Vergleichsbeispiel 4, das LDPE-4 in Vergleichsbeispiel 8 und das LLDPE-3 in Beispiel 6 beschrieben. Das EA-1 ist ein Copolymerisat aus Ethylen und ca. 12 Gew.-% Methacrylsäure, die Dichte beträgt 0,94 g/cm³ und der Schmelzindex MFR(190/2,16) 7 g/10 min.

Das Beispiel 10 hat den Aufbau (90% LLDPE-2+10% LDPE-4)/(60% LLDPE-3 + 40% EE). Es unterscheidet sich vom Beispiel 9 in der Siegelschicht, denn hier ist eine Mischung aus 60% LLDPE-3 mit 40% des in Beispiel 6 erwähnten EE. Beispiel 11 hat den Aufbau (90% LLDPE-2+10% LDPE-4)/(60% LLDPE-3 + 40% EA-2), es unterscheidet sich von Beispiel 10 nur in der Siegelschicht. Es enhält in der Siegelschicht das Copolymerisat EA-2 bestehend aus Ethylen und ca. 9,5 Gew.-% Acrylsäure, die Dichte beträgt 0,935 g/cm³ und der Schmelzindex MFR(190/2,16) 7 g/10 min. Die Beispiele 10 und 11 haben wie Beispiel 9 die Schichtdicken 60/30 µm.

**Tabelle 3:**

| Beurteilung der Siegelnahtfestigkeit Papier/Folie | | | |
|---|---|---|---|
| Muster | Siegeltemperatur °C | Siegelzeit s | Nahtfestigkeit Papier/Folie |
| Vergleichsbeispiel 1 | 140 | 1,5 | - |
| Vergleichsbeispiel 8 | 140 | 1,5 | - |
| Beispiel 9 | 140 | 1,5 | ++ |
| Beispiel 10 | 140 | 1,5 | ++ |
| Beispiel 11 | 140 | 1,5 | ++ |

## Patentansprüche

1. Mehrschichtige, tiefziehbare, klebstofffreie und gegen Papier siegelbare Folie, dadurch gekennzeichnet, daß
- alle Schichten Polyolefine oder Copolymerisate, deren Olefingehalt mindestens 60 Mol-% beträgt, enthalten und
- auf der Siegelseite der Folie eine Mischung aus 10 bis 90 Gew.-% (1. Komponente) linearem Ethylencopolymerisat niedriger Dichte (LLDPE) und 90 bis 10 Gew.-% (2. Komponente) Ethylencopolymerisat, das entweder mit ungesättigten Carbonsäuren oder mit ungesättigten Estern gebildet wird, enthält und
- die der Siegelseite gegenüberliegende Außenschicht der Folie Polypropylen oder Copolymerisaten des Propylens oder eine Mischung von zwei unterschiedlichen LLDPE-Typen oder eine Mischung von LLDPE mit LDPE enthält.

2. Folie nach Anspruch 1, dadurch gekennzeichnet, daß die 1. Mischungskomponente der Siegelschicht (LLDPE) als Comonomer ein oder mehrere α-Olefine mit mehr als 3 C-Atomen enthält.

3. Folie nach Anspruch 1 oder 2, dadurch gekennzeichnet, daß die 2. Mischungskomponente der Siegelschicht ein Ethylencopolymerisat, das als Comonomere entweder die ungesättigten Carbonsäuren Acryl- oder Methacrylsäure, die auch vollständig oder teilweise mit Metallionen, wie zum Beispiel Natrium- oder Zinkionen, versalzt sein können, oder die ungesättigten Ester Ethyl-, Methyl- oder Butylacrylat enthält.

4. Folie nach einem der Ansprüche 1 bis 3, dadurch gekennzeichnet, daß die der Siegelschicht abgewandte Folienseite aus Polypropylen oder einem modifizierten Propylencopolymerisat mit mindestens 90 Mol-% Propylen, das vorzugsweise als Comonomere ein oder mehrere α-Olefine wie zum Beispiel Ethylen oder Buten-1 enthält, die statistisch verteilt in der Polymerkette vorliegen, besteht.

5. Folie nach einem der Ansprüche 1 bis 4, dadurch gekennzeichnet, daß die der Siegelschicht abgewandte Folienseite aus einer Mischung zweier LLDPE-Typen, die sich in der Zusammensetzung der Comonomere unterscheiden, besteht, die vorzugsweise im Gewichtsverhältnis 2:1 bis 1:2 gemischt sind.

6. Folie nach einem der Ansprüche 1 bis 5, dadurch gekennzeichnet, daß die der Siegelschicht abgewandte Folienseite aus einer Mischung von LLDPE mit LDPE besteht, die im Gewichtsverhältnis von 95% bis 80% LLDPE zu 5% bis 20% LDPE gemischt sind.

7. Folie nach einem der Ansprüche 1 bis 6, dadurch gekennzeichnet, daß die Polymere in den Folienzwischenschichten folgende Monomere beinhalten: ein oder mehrere Olefine, Acrylsäure, Methacrylsäure, Vinylacetat, Ethylacrylat, Methylacrylat oder Butylacrylat.

8. Folie nach einem der Ansprüche 1 bis 7, dadurch gekennzeichnet, daß die Folie Gleit- und/oder Antiblockmittel enthält.

9. Folie nach einem der Ansprüche 1 bis 8, dadurch gekennzeichnet, daß die der Siegelschicht abgewandte Folienaußenseite plasmavorbehandelt ist.

10. Folie nach einem der Ansprüche 1 bis 9, dadurch gekennzeichnet, daß die Folie bedruckt oder mindestens eine Schicht eingefärbt ist.

11. Folie nach einem der Ansprüche 1 bis 10, dadurch gekennzeichnet, daß die Folie mit einen Kunststoffvlies oder einer Folie, die eine auf Ethylen basierende Siegelschicht aufweist, versiegelt wird.

12. Folie nach einem der Ansprüche 1 bis 11, dadurch gekennzeichnet, daß sie einen Sterilisationsprozeß, wie zum Beispiel mittels energiereicher Strahlung oder mittels Begasung mit Ethylenoxid, ausgesetzt wird.

13. Folie nach einem der Ansprüche 1 bis 12, dadurch gekennzeichnet, daß die erfindungsgemäße Folie für die Verpackung von medizinischen Geräten oder anderer Produkte, die eine Wasserdampfbarriere oder Schutz vor mikrobieller Kontamination benötigen, eingesetzt wird.

## Claims

1. Multi-layer, deep-drawable, adhesive-free film which can be sealed to paper, characterised in that
- all the layers contain polyolefins or copolymers the olefin content of which is at least 60 mol%, and
- the sealing side of the film contains a mixture of from 10 to 90 wt.% (1st component) of linear low-density ethylene copolymer (LLDPE) and from 90 to 10 wt.% (2nd component) of ethylene copolymer that is formed either with unsaturated carboxylic acids or with unsaturated esters, and
- the outer layer of the film, which is opposite the sealing side, contains polypropylene or copolymers of propylene or a mixture of two different types of LLDPE or a mixture of LLDPE and LDPE.

2. Film according to claim 1, characterised in that the 1st component of the mixture forming the sealing layer (LLDPE) contains as comonomer one or more α-olefins having more than 3 carbon atoms.

3. Film according to claim 1 or 2, characterised in that the 2nd component of the mixture forming the sealing layer is an ethylene copolymer which contains as comonomers either the unsaturated carboxylic acids acrylic or methacrylic acid, which may also be completely or partially salified with metal ions, such as, for example, sodium or zinc ions, or the unsaturated esters ethyl, methyl or butyl acrylate.

4. Film according to any one of claims 1 to 3,
characterised in that the side of the film remote from the sealing layer consists of polypropylene or a modified propylene copolymer having at least 90 mol% propylene, which preferably contains as comonomers one or more α-olefins, such as, for example, ethylene or but-1-ene, which are randomly distributed in the polymer chain.

5. Film according to any one of claims 1 to 4,
characterised in that the side of the film remote from the sealing layer consists of a mixture of two types of LLDPE which differ in the composition of the comonomers and which are preferably mixed in a weight ratio of from 2:1 to 1:2.

6. Film according to any one of claims 1 to 5,
characterised in that the side of the film remote from the sealing layer consists of a mixture of LLDPE and LDPE, which are mixed in a weight ratio of from 95 % to 80 % LLDPE to from 5 % to 20 % LDPE.

7. Film according to any one of claims 1 to 6,
characterised in that the polymers in the intermediate layers of the film contain the following monomers: one or more olefins, acrylic acid, methacrylic acid, vinyl acetate, ethyl acrylate, methyl acrylate or butyl acrylate.

8. Film according to any one of claims 1 to 7,
characterised in that the film contains lubricants and/or antiblocking agents.

9. Film according to any one of claims 1 to 8,
characterised in that the side of the film remote from the sealing layer has been subjected to plasma pretreatment.

10. Film according to any one of claims 1 to 9,
characterised in that the film has been printed on or at least one layer has been dyed.

11. Film according to any one of claims 1 to 10,
characterised in that the film is sealed by means of a synthetic nonwoven or a film having an ethylene-based sealing layer.

12. Film according to any one of claims 1 to 11,
characterised in that it is subjected to a sterilising process, such as, for example, by means of high-energy radiation or by means of gassing with ethylene oxide.

13. Film according to any one of claims 1 to 12,
characterised in that the film according to the invention is used for the packaging of medical equipment or other products which require a water-vapour barrier or protection against microbial contamination.

## Revendications

1. Feuille multicouches emboutissable, exempte d'adhésif et scellable contre du papier, caractérisée en ce que :
- toutes les couches contiennent des polyoléfines ou des copolymères dont la teneur en oléfines est d'au moins 60% molaires ; et
- la face de scellage de la feuille contient un mélange de 10 à 90% en poids (premier composant) de copolymère d'éthylène linéaire basse densité (PELBD) et de 90 à 10% en poids (deuxième composant) d'un copolymère d'éthylène formé soit avec des acides carboxyliques insaturés, soit avec des esters insaturés ; et
- la couche externe qui fait face à la face de scellage contient du polypropylène ou un copolymère du propylène ou un mélange de deux types de PELBD différents ou un mélange de PELBD et de PEBD.

2. Feuille selon la revendication 1, caractérisée en ce que le premier composant du mélange de la couche de scellage (PELBD) contient comme comonomère une ou plusieurs α-oléfines ayant plus de 3 atomes de carbone.

3. Feuille selon la revendication 1 ou la revendication 2, caractérisée en ce que le deuxième composant du mélange de la couche de scellage est un copolymère d'éthylène qui contient comme comonomères soit les acides carboxyliques insaturés acide acrylique ou acide méthacrylique, qui peuvent être également salifiés partiellement ou totalement avec des ions métalliques tels que des ions de sodium ou de zinc, soit les esters insaturés acrylate d'éthyle, acrylate de méthyle ou acrylate de butyle.

4. Feuille selon l'une des revendications 1 à 3, caractérisée en ce que la face de la feuille à l'opposé de la couche de scellage est composée de polypropylène ou d'un copolymère de propylène modifié avec au moins 90% molaires de propylène et contenant de préférence comme comonomères une ou plusieurs α-oléfines telles que l'éthylène ou le but-1-ène réparties statistiquement dans la chaîne polymère.

5. Feuille selon l'une des revendications 1 à 4, caractérisée en ce que la face de la feuille à l'opposé de la couche de scellage est composée d'un mélange de deux types de PELBD se différenciant par leur composition en comonomères qui sont de préférence mélangés selon un rapport en poids de 2:1 à 1:2.

6. Feuille selon l'une des revendications 1 à 5, caractérisée en ce que la face de la feuille à l'opposé de la couche de scellage est composée d'un mélange de PELBD et de PEBD qui sont mélangés selon un rapport en poids de 95% à 80% de PELBD pour 5% à 20% de PEBD.

7. Feuille selon l'une des revendications 1 à 6, caractérisée en ce que les polymères dans les couches intermédiaires de la feuille contiennent les monomères suivants : une ou plusieurs oléfines, acide acrylique, acide méthacrylique, acétate de vinyle, acrylate d'éthyle, acrylate de méthyle ou acrylate de butyle.

8. Feuille selon l'une des revendications 1 à 7, caractérisée en ce que la feuille contient de l'agent lubrifiant et/ou de l'agent antiblocage.

9. Feuille selon l'une des revendications 1 à 8, caractérisée en ce que la face de la feuille à l'opposé de la couche de scellage est prétraitée au plasma.

10. Feuille selon l'une des revendications 1 à 9, caractérisée en ce que la feuille est imprimée ou qu'une couche au moins est teintée.

11. Feuille selon l'une des revendications 1 à 10, caractérisée en ce que la feuille est scellée avec un non-tissé en poids moléculaire ou avec une feuille qui présente une couche de scellage à base d'éthylène.

12. Feuille selon l'une des revendications 1 à 11, caractérisée en ce qu'elle est soumise à un processus de stérilisation au moyen, par exemple, d'un rayonnement énergétique ou par exposition à du gaz oxyde d'éthylène.

13. Feuille selon l'une des revendications 1 à 12, caractérisée en ce que la feuille selon l'invention est utilisée pour l'emballage d'appareils médicaux ou d'autres produits nécessitant une barrière contre la vapeur d'eau ou une protection contre la contamination microbienne.
